# EUROPEAN PATENT APPLICATION

(11) **EP 4 671 530 A1**
(43) Date of publication of application: **31.12.2025**
(21) Application number: 24382688.0
(22) Date of filing: 25.06.2024
(51) Int. Cl.: F03D 7/02, F03D 17/00

(54) **METHOD FOR OPERATING A WIND TURBINE AND WIND TURBINE**

(71) Applicant: Nordex Energy SE & Co. KG, 22419 Hamburg (DE); Nordex Energy Spain, S.A.U., 31395 Barasoain (Navarra) (ES)
(72) Inventor: Frommann, Johannes, 22419 Hamburg (DE); Mercader Gómez, Pedro, 31395 BARASOAIN (ES); Kadajji, Keerthan, 22419 Hamburg (DE)
(74) Representative: Epping - Hermann - Fischer

(57) **Abstract**

According to an embodiment, the method is for operating a wind turbine (100) having a rotor (10) with at least two rotor blades (1, 2, 3) and a pitch adjustment system (500) for adjusting the pitch angles (β_1) of the at least two rotor blades. The method comprises a step of determining first information (11) which is representative of the appearance of a failure in the pitch adjustment system while the rotor is rotating. In a further step, second information (12) is provided which is representative of the actual rotational speed (n_a) of the rotor. Then, third information (13) is determined depending on the first and the second information, wherein the third information is representative of a pitch angle setpoint (SP_β_i) for at least one rotor blade. The pitch angle setpoint depends on the actual rotational speed and is chosen to reduce the rotational speed of the rotor. When the wind turbine is operated according to the third information, a pitch angle of at least one rotor blade is adjusted to the pitch angle setpoint.

## Description

The present disclosure relates to a method for operating a wind turbine. Furthermore, the disclosure relates to a computer program, a computer-readable data carrier, a control device and a wind turbine.

Wind turbines are widely known and are used to convert wind energy into electrical energy. In case of a failure in the wind turbine, e.g. a failure in the pitch adjustment system thereof, it might be necessary to stop the wind turbine.

One object to be achieved is to provide a method which contributes to a safe and efficient operation of the wind turbine, particularly in the case of a failure in the pitch adjustment system. Further objects to be achieved are to provide a computer program, a computer-readable data carrier, a control device and a wind turbine for executing such a method.

First, the method for operating a wind turbine is specified.

According to an embodiment, the method is for operating a wind turbine having a rotor with at least two rotor blades and a pitch adjustment system for adjusting the pitch angles of the at least two rotor blades. The method comprises a step of determining first information which is representative of the appearance of a failure in the pitch adjustment system while the rotor is rotating. In a further step, second information is provided which is representative of the actual rotational speed of the rotor. Then, third information is determined depending on the first and the second information, wherein the third information is representative of a pitch angle setpoint for at least one rotor blade. The pitch angle setpoint depends on the actual rotational speed and is chosen to reduce the rotational speed of the rotor. When the wind turbine is operated according to the third information, a pitch angle of at least one rotor blade is adjusted to the pitch angle setpoint.

When a failure appears in the pitch adjustment system of a wind turbine, the pitch angle of one or more rotor blades may not be appropriate for the wind conditions anymore, which may lead to an overloading and thus to a damage of the wind turbine components. In order to avoid such damage, the wind turbine must be slowed down or even stopped in a fast manner, e.g. via an emergency stopping procedure. This can be done, for example, by pitching the rotor blades towards or into their feathering positions. The present invention is based, inter alia, on the recognition that increasing the pitch angles of the rotor blades towards the feathering positions in case of appearance of a pitch adjustment system failure, e.g. during an emergency stopping procedure, can induce a high aerodynamic imbalance in the rotor during rotation. Particularly, this happens if a pitch angle difference between two rotor blades becomes large due to one rotor blade being stuck or only movable slowly and only the remaining rotor blade(s) can be set towards the feathering position(s). Such a high aerodynamic imbalance causes high loads on the components and support structures arranged in the nacelle. In particular, a high aerodynamic imbalance causes high loads in the yaw system which could lead to slippage and damage of the yaw drives or the yaw gears. The aerodynamic imbalance can become particularly high when the rotor is still rotating at high speeds.

The present disclosure provides, inter alia, a method, in which slowing down of the rotor is achieved by taking into account the aerodynamic imbalance, for example, by exploiting the maximum allowable imbalance. Indeed, by determining the pitch angle setpoint depending on the actual rotational speed of the rotor, the aerodynamic imbalance is considered and controllable when slowing down the rotation of the rotor.

The method specified herein is, in particular, a computer-implemented method, i.e. is performed with the help of a computer or a processor. For example, the method is executable by a control device of the wind turbine, such as a main controller of the wind turbine, also called "turbine controller".

Herein, when information is representative of a certain quantity or certain quantities, this means that the quantity or quantities can be extracted from the information, either directly, or the quantity/quantities can at least be derived from the information. In other words, the quantity/quantities is/are stored in the information, or at least data are stored in the information, from which the quantity/quantities can be derived or determined or calculated, respectively. Furthermore, here and in the following, information is, in particular, electronic information, like electronic data.

A setpoint herein defines a certain target to be achieved when operating the wind turbine. For example, the pitch angle setpoint is the target value of the pitch angle of a rotor blade. The realization of the pitch angle to become the pitch angle setpoint can be done with help of a controller, e.g. in a closed feedback loop.

The wind turbine comprises a pitch adjustment system. The pitch adjustment system is configured to change or set or adjust the pitch angles of the at least two rotor blades. For example, the pitch adjustment system comprises, for each rotor blade of the rotor, a pitch bearing for movably supporting the rotor blade and a pitch drive for driving the movement of the rotor blade around the pitch bearing axis. The pitch drives may be electromechanical or hydraulic drives. For example, the pitch drives comprise electric motors. For example, in addition to the pitch bearings and the pitch drives, the pitch adjustment system comprises a control device, e.g. a so-called "pitch controller", which controls the pitch drives so that the pitch angles of the at least two rotor blades are brought to the pitch angle setpoint(s). In another example, the pitch adjustment system comprises a pitch bearing, a pitch drive and a control device, e.g. a so-called "pitch controller", for each rotor blade of the rotor. The pitch adjustment system may be configured to adjust the pitch angles of all rotor blades individually, so-called individual pitch control, IPC for short, or may only be able to adjust the pitch angles of all rotor blades collectively, so-called collective pitch control, CPC for short.

The first information is representative of the appearance of a failure in the pitch adjustment system. For example, the first information is representative of whether a failure in the pitch adjustment system appears or if everything is ok. The first information may be determined depending on measurements. The measurements may be taken with the help of at least one sensor, e.g. incremental encoders assigned to the rotor blades.

The second information is representative of the actual rotational speed of the rotor. The second information may be determined depending on measurements. The measurements may be taken with the help of at least one sensor. The sensor may be an incremental encoder assigned to the rotor, for example.

The third information is determined depending on the first and the second information and is representative of a pitch angle setpoint for at least one rotor blade. For example, if the first information is representative of the appearance of a failure in the pitch adjustment system, the third information is determined such that the pitch angle setpoint of the at least one rotor blade depends on the rotational speed and is selected to reduce the rotational speed. For example, the pitch angle setpoint is determined such that the pitch angle of the at least one rotor blade is increased towards the feathering position.

Here and in the following, the expression "if" is herein meant to introduce a necessary condition. It may but does have to introduce a sufficient condition.

The third information may be representative of two or more pitch angle setpoints for different rotor blades. Alternatively, the pitch angle setpoint is common for two or more rotor blades. For example, if one of the rotor blades is damaged or hindered or impaired in its movement or is stuck, the pitch angle setpoint(s) of the third information is at least for the one or more other (movable) rotor blades.

The pitch angle setpoint depends on the actual rotational speed, i.e. the rotational speed the rotor has at the moment of determining the third information. For example, the pitch angle setpoint increases with decreasing rotational speed. Moreover, the pitch angle setpoint is chosen to reduce the rotational speed of the rotor. For example, the pitch angle setpoint is chosen to increase in order to reduce the rotational speed.

Providing the second information and determining the third information is, for example, done repeatedly or continuously. Accordingly, the third information or the pitch angle setpoint, respectively, may be repeatedly or continuously updated according to the current actual rotational speed. The pitch angle setpoint may thereby repeatedly or continuously increased as a function of time.

When the wind turbine, particularly when the pitch adjustment system, is operated according to the third information, the pitch angle of at least one rotor blade is adjusted to the pitch angle setpoint. In other words, the third information is an operating information for the wind turbine or the pitch adjustment system, respectively, and is configured to cause an operation of the wind turbine or the pitch adjustment system such that the pitch angle of at least one rotor blade is brought to the pitch angle setpoint.

For example, if the third information is determined by the turbine controller, it may then be sent to a control device of the pitch adjustment system, e.g. to the so-called "pitch controller", which then operates the pitch adjustment system according to the third information. Alternatively, the third information could be directly determined by the pitch controller.

According to a further embodiment, the failure in the pitch adjustment system is a fault event in which at least one of the rotor blades is hindered or impaired, respectively, in its mobility (in the following also called "impaired rotor blade"). At least one other rotor blade is, however, still movable as intended (in the following called "movable-as-intended rotor blade)". In other words, the fault event is an event in which at least one but not all rotor blades are hindered in its mobility and at least one rotor blade but not all rotor blades is still working correctly. That a rotor blade is hindered in its mobility can mean that the rotor blade is stuck, i.e. cannot be moved around this pitch bearing axis anymore, or that it can only be moved much more slowly than intended. Examples of fault events in which the mobility of a rotor blade is hindered or impaired may be a damage or malfunction of one or more of a pitching bearing, a pitch drive and a pitch controller.

According to a further embodiment, the pitch angle setpoint is for the at least one movable-as-intended rotor blade and is chosen such that the difference between the pitch angle setpoint and the pitch angle of the at least one impaired rotor blade is lower or equal to a maximum allowable pitch angle difference. The maximum allowable pitch angle difference depends on the actual rotational speed of the rotor. For example, the maximum allowable pitch angle difference decreases with increasing actual rotational speed of the rotor. For example, the pitch angle setpoint is chosen such that the difference between pitch angle setpoint and the pitch angle of the at least one impaired rotor blade follows or equals the maximum allowable pitch angle difference as a function of the actual rotational speed.

Indeed, in the case of an impaired rotor blade, the movement of the at least one movable-as-intended rotor blade towards the feathering position causes a large difference between the pitch angles of the rotor blades. This, however, creates the above-mentioned aerodynamic imbalance which might harm the yaw system. By defining the maximum allowable pitch angle difference depending on the rotational speed of the rotor, the imbalance can be kept in an acceptable range. For example, in order to determine the third information or the pitch angle setpoint for the at least one movable-as-intended rotor blade, respectively, a lookup table is used. The lookup table may have been generated offline by postprocessing of simulations with static wind speeds, rotor speeds and pitch angles, so-called rotor maps. In another example, the determination of the third information or the pitch angle setpoint for the at least one movable-as-intended rotor blade, respectively, is performed in real-time based on load calculations, wherein the load calculations consist in calculating in real-time the loads acting on the wind turbine components based on current sensor data.

The third information may also be representative of a pitch angle setpoint of the at least one impaired rotor blade. For example, the pitch angle setpoint for the at least one impaired rotor blade is equal to the pitch angle setpoint for the movable as intended rotor blade or the same pitch angle setpoint is used. This has the advantage that, if the failure disappears, e.g. the impaired rotor blade becomes loose, it is adjusted to the same pitch angle as the other rotor blades and the imbalance reduces.

According to a further embodiment, the wind turbine further comprises a generator coupled to the rotor in order to convert mechanical power into electrical power. Particularly, the generator is configured to convert the rotation of the rotor into electrical power. The generator can either be directly coupled to the rotor or indirectly via, for example, a gearbox.

According to a further embodiment, the method further comprises a step of determining fourth information depending on the first and the second information. The fourth information is representative of a generator torque setpoint. The generator torque setpoint depends on the actual rotational speed of the rotor and is chosen to reduce the rotational speed of the rotor. Alternatively, the generator torque setpoint is chosen to reduce the rotational speed of the rotor while ensuring that a maximum allowable generator torque is not exceeded, wherein the maximum allowable generator torque depends on the actual rotational speed. In particular, the fourth information is determined as specified if the first information is representative of a failure in the pitch adjustment system.

The generator torque setpoint or the maximum allowable generator torque may increase with increasing rotational speed of the rotor. For example, the generator torque setpoint or the maximum allowable generator torque is chosen to be greater than a nominal generator torque of the wind turbine. The generator torque setpoint or the maximum allowable generator torque may exceed the nominal generator torque by at least 5% and/or at most 20%, for example. By way of example, the generator torque setpoint or the maximum allowable generator torque is chosen to be greater than the nominal generator torque for a limited time, e.g. of at least 5 s. After that, the generator torque setpoint or the maximum allowable generator torque is chosen, for example, to be equal to or lower than the nominal generator torque.

According to a further embodiment, the fourth information is determined such that, when the wind turbine is operated according to the fourth information, a generator torque of the generator is adjusted to the generator torque setpoint. In other words, the fourth information is an operating information which is configured to cause an operation of the wind turbine such that the generator torque is brought to the generator torque setpoint. For example, the fourth information is sent to or determined by a generator torque adjustment system coupled to the generator in order to adjust the generator torque. For example, the generator torque adjustment system comprises a generator torque controller. For example, the generator torque adjustment system additionally comprises a generator side converter coupled to the generator, in which case the generator torque controller is (part of) a generator side converter controller.

Increasing the generator torque setpoint is another measure which enables to slow down the rotor rotation. However, in order to not damage the generator or the electrical systems or a gearbox between the rotor and the generator or to not violate safety regulation, the generator torque must be kept within certain limits or must not exceeds these limits by more than a limited time. The torque limit may also change with the rotational speed of the rotor. Thus, since the generator torque cannot be made arbitrarily high in order to brake the rotation of the rotor, it is particularly advantageous to additionally use the aerodynamic braking by adjusting the pitch angles(s).

According to a further embodiment, the third and the fourth information are determined such that, when the wind turbine is operated according to the third and the fourth information, the adjustment of the pitch angle of the at least one rotor blade to the pitch angle setpoint and the adjustment of the generator torque to the generator torque setpoint are done simultaneously. This turned out to be particularly efficient in slowing down the rotor rotation and, at the same time, to protect the wind turbine against damage.

According to a further embodiment, the method further comprises a step of determining fifth information depending on the first and the second information. The fifth information is representative of a pitch angle change rate, also called "pitch speed", wherein the pitch angle change rate depends on the actual rotational speed of the rotor and defines the maximum speed with which the pitch angle of at least one rotor blade is adjusted to the pitch angle setpoint or defines the speed with which the pitch angle setpoint is changed. For example, the fifth information is determined as specified, if the first information is representative of a failure in the pitch adjustment system.

The sensitivity of the wind turbine loading to changes in operational parameters typically depends on the rotational speed of the rotor. For example, a rapid change of pitch angle at a high rotational speed of the rotor, e.g. at a rotational speed close or equal to the nominal rotational speed, may cause a higher aerodynamic imbalance on the rotor than at a low rotational speed of the rotor. Therefore, it can help to change the pitch angle change rate depending on the actual rotational speed of the rotor. For example, the pitch angle change rate increases with decreasing rotational speed of the rotor. The pitch angle change rate as a function of the actual rotational speed of the rotor may be a staircase function with two constant values of the pitch angle change rate.

The fifth information is, in particular, an operating information, e.g. for the pitch adjustment system, so that, when the wind turbine or the pitch adjustment system is operated according to the third and the fifth information, the pitch angle of at least one rotor blade is adjusted to the pitch angle setpoint, wherein the pitch angle setpoint changes with the pitch angle change rate or the pitch angle of at least one rotor blade is adjusted to the pitch angle setpoint with a speed which is equal to or lower than the pitch angle change rate.

As mentioned above, the third information may be determined repeatedly or continuously. Accordingly, the pitch angle setpoint may be changed repeatedly or continuously due to a change in the actual rotational speed of the rotor. The adjustment of the pitch angle of the at least one rotor blade to the pitch angle setpoint usually happens much faster than the change in the pitch angle setpoint caused by the change of the rotational speed of the rotor.

According to a further embodiment, the rotor comprises at least three rotor blades. In this case, the above-mentioned fault event is, in particular, an event in which two or more rotor blades are movable as intended and one or more rotor blades are hindered in their mobility, e.g. are stuck. The third information is then, in particular, representative of the pitch angle setpoint(s) for the at least two movable-as-intended rotor blades. Likewise, the fifth information may then be representative of the pitch angle change rate(s) of the at least two movable-as-intended rotor blades.

According to a further embodiment, the third information is determined such that, when the wind turbine is operated according to the third information, the pitch angles of at least two movable-as-intended rotor blades are synchronized. That is, the pitch angle setpoints for the two movable-as-intended rotor blades are equal or the same pitch angle setpoint is used for both rotor blades. Particularly, collective pitch control (CPC) is applied for the at least two moveable-as-intended rotor blades.

According to a further embodiment, the wind turbine is operable in a first operating mode and a second operating mode. The first operating mode is a mode in which the pitch angles of the rotor blades are controlled individually (individual pitch control, IPC) and the second operating mode is a mode in which the pitch angles of the rotor blades are controlled collectively (collective pitch control, CPC). "Controlled individually" means, in particular, that the pitch angle setpoints are determined individually for the different rotor blades and can assume different values. Controlled collectively means that the pitch angle setpoints are determined to be equal or the same pitch angle setpoint is used for all rotor blades.

According to a further embodiment, if the wind turbine is operated in the first operating mode when the first information is determined to be representative of a failure in the pitch adjustment system, the method further comprises a step of generating a switch command which is configured to cause a transition from the first operating mode into the second operating mode. In other words, it is switched from IPC to CPC. Indeed, by switching into the second operating mode in the case of a failure in the pitch adjustment system, the aerodynamic imbalance caused by the individual pitch control can be avoided.

According to a further embodiment, determining the first information comprises determining whether the pitch angle of one rotor blade differs from the pitch angle of at least one other rotor blade by more than a defined threshold.

According to a further embodiment, the generator torque setpoint or the maximum allowable generator torque increases with increasing actual rotational speed. In other words, the generator torque setpoint or the maximum allowable generator torque used in the case of a failure in the pitch adjustment system is an increasing function of the actual rotational speed. For example, the generator torque setpoint or the maximum allowable generator torque increases monotonically or strictly monotonically with increasing rotational speed of the rotor. The generator torque setpoint or the maximum allowable generator torque as a function of the actual rotational speed may be determined from nominal values of the different power modes of the wind turbine, for example.

According to a further embodiment, the maximum allowable pitch angle difference decreases with increasing actual rotational speed of the rotor. In other words, the maximum allowable pitch angle difference used in the case of a failure in the pitch adjustment system is a decreasing function of the actual rotational speed. For example, it decreases in a monotonical or strictly monotonical manner.

According to the further embodiment, the pitch angle setpoint is chosen to reduce the rotational speed of the rotor up to a stop of the rotation of the rotor. Additionally or alternatively, the generator torque setpoint or the maximum allowable generator torque may be chosen to reduce the rotational speed of the rotor up to a stop of the rotation of the rotor.

Next, the computer program, the computer-readable data carrier and the control device are specified.

According to an embodiment, the computer program comprises instructions which, when the program is executed by a control device, cause the control device to carry out the method for operating a wind turbine according to any one of the embodiments described herein.

According to an embodiment, the computer-readable data carrier has the computer program stored thereon.

According to an embodiment, the control device is configured to execute the method for operating a wind turbine according to any one of the embodiments described herein. Particularly, the method is carried out when the above-mentioned computer program is executed by the control device.

The control device may comprise at least one processor and/or at least one programmable logic controller, plc for short. The control device may be part of the wind turbine. For example, the control device comprises or consists of the turbine controller. The control device may further comprise the pitch controller and/or the generator torque controller.

Next, the wind turbine is specified. The wind turbine is, in particular, configured to execute the method according to any of the embodiments described herein or to be operated according to the method according to any of the embodiments described herein. Thus, all features disclosed in connection with the method are also disclosed for the wind turbine and vice versa.

According to an embodiment, the wind turbine comprises a rotor with at least two rotor blades, the control device according to any of the embodiments described herein and a pitch adjustment system for adjusting the pitch angles of the rotor blades. The control device is signally connected or connectable to the pitch adjustment system. The wind turbine is configured such that, upon provision of the third information, the pitch adjustment system adjusts the pitch angle of at least one rotor blade to the pitch angle setpoint.

According to a further embodiment, the wind turbine further comprises a generator and a generator torque adjustment system for adjusting a generator torque of the generator. The control device is signally connected or connectable to the generator torque adjustment system. The wind turbine is configured such that, upon provision of the fourth information, the generator torque adjustment system adjusts the generator torque to the generator torque setpoint. For example, the generator torque adjustment system comprises a generator torque controller. For example, the generator torque adjustment system additionally comprises a generator side converter coupled to the generator, in which case the generator torque controller is (part of) a generator side converter controller.

Hereinafter, the method for operating a wind turbine, the control device and the wind turbine will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. Insofar as elements or components correspond to one another in terms of their function in different figures, the description thereof is not repeated for each of the following figures. For the sake of clarity, elements might not appear with corresponding reference symbols in all figures.
Figure 1 shows an exemplary embodiment of the wind turbine,
Figures 2 and 3 show flow charts of exemplary embodiments of the method for operating a wind turbine,
Figure 4 shows an exemplary embodiment of a control system of a wind turbine,
Figures 5 to 7 show different graphs associated with the operation of the wind turbine.

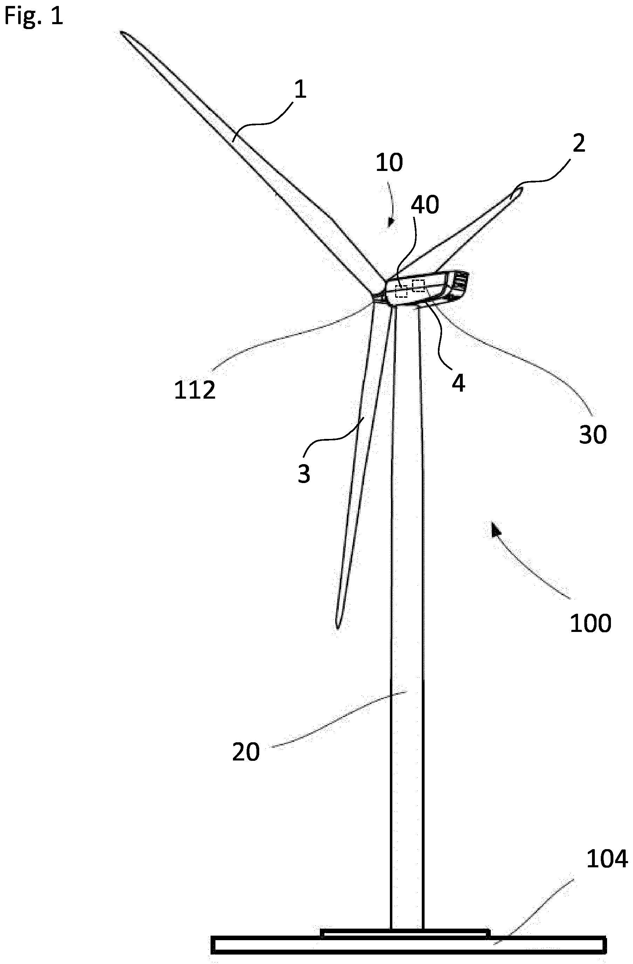

Figure 1 shows a wind turbine 100 which comprises a tower 20. The tower 20 is fixed to the ground by means of a foundation 104. A nacelle 4 is rotatably mounted at one end of the tower 20, opposite to the ground. The nacelle 4 comprises a generator 40 which is coupled to a rotor 10, e.g. via a gearbox (not shown). The rotor 10 comprises three (wind turbine) rotor blades 1, 2, 3, which are arranged on a rotor hub 112, said rotor hub 112 being connected to a rotor shaft (not shown).

During operation, the rotor 10 is set in rotation by an air flow, for example wind. This rotational movement is transmitted to the generator 40 via the drive train comprising, inter alia, the rotor shaft and optionally the gearbox. The generator 40 converts the mechanical energy of the rotor 10 into electrical energy.

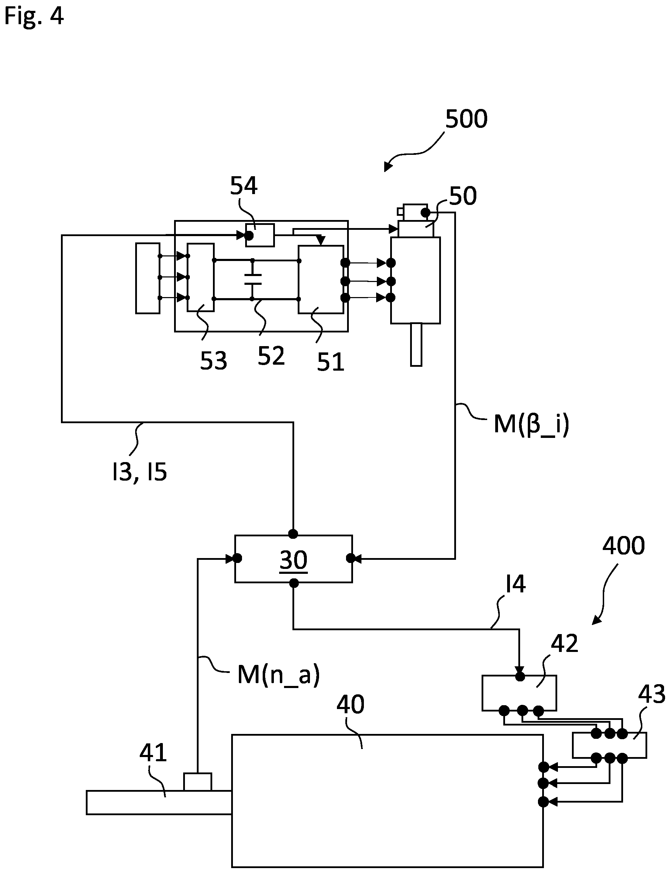

For optimizing the energy output of the wind turbine 100, the nacelle 4 has to be rotated into the wind. The pitch angles of the rotor blades 1, 2, 3 have to be set according to the wind speed. This is done with the help of drives which rotate the rotor blades 1, 2, 3 and the nacelle 4 to a respective target position. The drives for the rotor blades 1, 2, 3 are part of a pitch adjustment system which is described in more detail in connection with Figure 4.

In order to control and operate the drives, the wind turbine comprises a control device 30 which determines pitch angle setpoints for the blades 1, 2, 3 and a yaw angle setpoint of the nacelle 4. The control device 30 is located in the nacelle 4. The control device 30 is herein also called "turbine controller 30".

The control device 30 also determines a generator torque setpoint with which the generator 40 is controlled. Not only the pitch angles of the rotor blades but also the generator torque influence the rotational speed of the rotor 10.

In the case of a failure in the pitch adjustment system, it can become necessary to slow down or stop the rotation of the rotor 10. In the situation that one of the rotor blades, e.g. rotor blade 1, is stuck, impaired or hindered in its mobility, reducing the rotational speed of the rotor by increasing the pitch angles of the remaining, movable rotor blades 2, 3 may lead to an aerodynamic imbalance which causes heavy loads on the yaw system of the wind turbine 100. On the other hand, increasing the generator torque in order to slow down the rotor rotation can only be done within certain limits so that using the generator torque alone to decelerate or stop the rotation of the rotor is not sufficient.

Computer program comprising instructions which, when the program is executed by a control system, cause the control system to carry out the method of any one of claims 1 to 11.

13. Computer-readable data carrier having the computer program of claim 12 stored thereon.

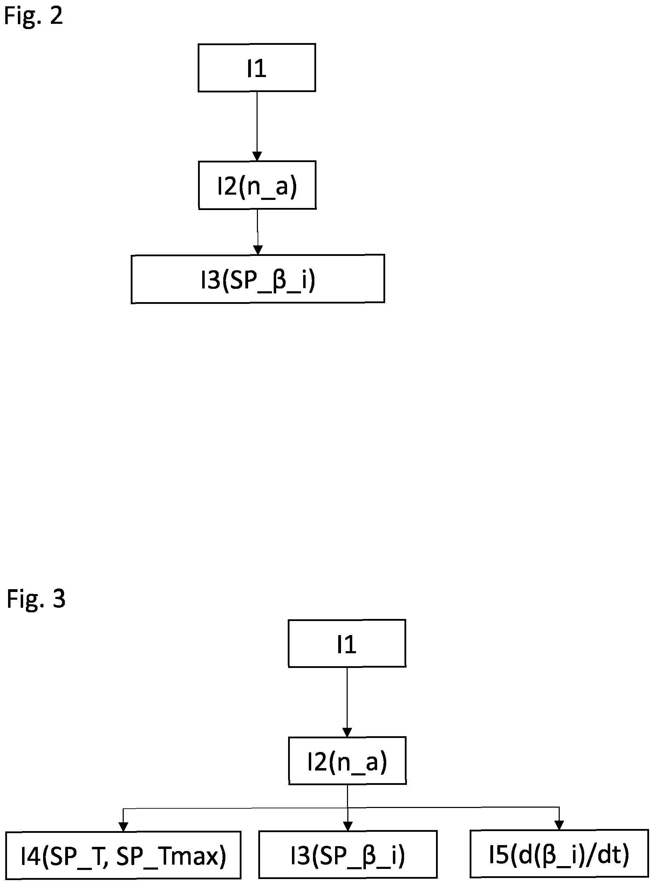

Figures 2 and 3 show flow charts of two different exemplary embodiments of a method for operating a wind turbine with which a deceleration or stop of the rotor rotation is achievable in an efficient and gentle manner, since it considers the possible aerodynamic imbalance of the rotor. Furthermore, the described method for operating a wind turbine can be a computer-implemented method in form of a computer program or can be a part thereof. Consequently, the computer program can comprise or be the method for operating a wind turbine as indicated in Figures 2 and 3. In other words, the method can be implemented in a computer program, so that the computer program product comprises instructions which, when the computer program is executed by a computer or computer system, cause the computer or computer system to carry out the method for operating a wind turbine. Furthermore, the computer program can be stored on a computer-readable data carrier. Accordingly, Figures 2 and 3 likewise show the computer program and the computer-readable data carrier. Features and embodiments referring to the method also apply to the computer program and to the computer-readable data carrier.

In the exemplary embodiment of Figure 2, first information I1 is determined which is representative of a failure in the pitch adjustment system. The failure may be a fault event in which one of the rotor blades is hindered or impaired in its mobility. The remaining two rotor blades remain, for example, movable as intended. Moreover, second information I2 is determined which is representative of the actual rotational speed n_a of the rotor 10. Third information I3 is determined depending on the first I1 and the second 12 information. The third information 13 is representative of a pitch angle setpoint SP_β_1, SP_β_2, SP_β_3 (SP_β_i for short) for at least one of the rotor blades 1, 2, 3. When the wind turbine is operated according to the third information 13, a pitch angle β_1 ,β_2 ,β_3 (β_i for short) of at least one of the rotor blades 1, 2, 3 is adjusted to the pitch angle setpoint SP_β_i. The pitch angle setpoint SP_β_i of the third information I3 depends on the actual rotational speed n_a and is chosen to reduce the rotational speed of the rotor 10.

For the sake of further illustration, the method is now applied to the wind turbine 100 of Figure 1 and it is assumed that a failure in the pitch adjustment system appears in which the rotor blade 1 is impaired in its mobility or is stuck whereas the remaining rotor blades 2, 3 are still movable as intended. The third information 13 may then be representative of the pitch angle setpoints SP_β_2, SP_β_3 for the two movable-as-intended rotor blades 2, 3. The movable-as-intended rotor blades 2, 3 may be adjusted to the pitch angle setpoints SP_β_2, SP_β_3 in a collective manner, i.e. the pitch angle setpoints SP_β_2, SP_β_3 are equal. If, before the detection of the failure in the pitch adjustment system, the wind turbine 100 has been operated in a first operating mode of individual pitch control (IPC), a switch command may have been generated after determining the first information I1 which causes a switch from the first to a second operating mode of collective pitch control (CPC).

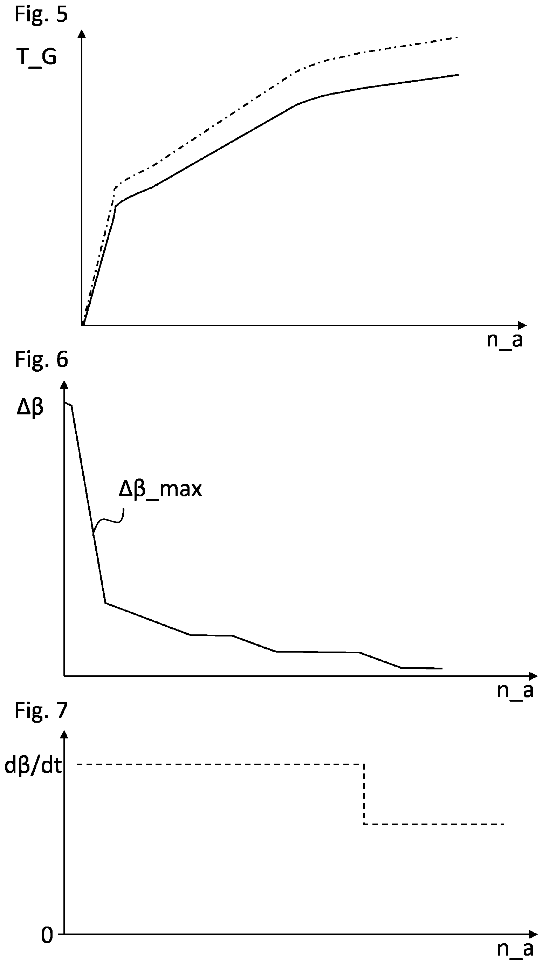

Figure 6 shows a graph indicating an example of how the pitch angle setpoint(s) SP_β_i for the movable-as-intended rotor blade(s) is/are determined. Coming back to the previous example, in which rotor blade 1 is impaired or stuck, the change of the pitch angles β_2, β_3 of the movable-as-intended rotor blades 2, 3 to the pitch angle setpoints SP_ β_2, SP_β_3 results in a difference Δβ between the pitch angles β_2, β_3 and the pitch angle β_1 of the stuck/impaired rotor blade 1. In order to keep the resulting aerodynamic imbalance acceptable, it should be avoided that this difference Δβ exceeds a maximum allowable pitch angle difference Δβ_max which is indicated by the graph in figure 6. As can be seen, this maximum allowable pitch angle difference Δβ_max decreases with increasing rotational speed n_a of the rotor 10. The pitch angle setpoints SP_ β_2, SP_β_3 of the two movable-as-intended rotor blades 2, 3 are now chosen such that the difference Δβ is equal to or lower than this maximum allowable pitch angle difference Δβ_max. In this way, an efficient deceleration of the rotor rotation can be achieved without inducing too high aerodynamic imbalances. The maximum allowable pitch angle difference Δβ_max as a function of the rotational speed n_a of the rotor may be determined depending on simulations.

Figure 3 shows another exemplary embodiment of the method for operating a wind turbine. As described in connection with Figure 2, first information I1 being representative of a failure in the pitch adjustment system and second information I2 being representative of the actual rotation speed n_a of the rotor 10 are determined. Then, three steps are executed. In one step, third information T3 is determined as explained in connection with Figure 2. In addition to what is shown in Figure 2, two further information 14 and 15 are determined.

The fourth information 14 is determined depending on the first information I1 and the second information I2. The fourth information 14 is representative of a generator torque setpoint SP_T. The generator torque setpoint SP_T thereby depends on the actual rotational speed n_a of the rotor 10 and is chosen to reduce the rotational speed of the rotor 10. Alternatively, the generator torque setpoint SP_T is chosen such that it reduces the rotational speed n_a of the rotor 10 while ensuring that a maximum allowable generator torque SP_T_max is not exceeded, wherein the maximum allowable generator torque SP_T_max depends on the actual rotational speed n_a. The fourth information 14 is determined such that, when the wind turbine 100 is operated according to the fourth information 14, a generator torque of the generator 40 is adjusted to the generator torque setpoint SP_T.

Figure 5 shows an example of how the generator torque setpoint SP_T or the maximum allowable generator torque SP_Tmax may be determined as a function of the actual rotational speed of the rotor 10. The y-axis shows the generator torque T_G and the x-axis shows the actual rotational speed n_a of the rotor 10. The solid line indicates the nominal generator torque as a function of the actual rotational speed n_a of the rotor. The dash-dotted line is determined as a 15% excess over the solid line. The generator torque setpoint SP_T or the maximum allowable generator torque SP_Tmax is determined according to the dash-dotted line for a limited time, for instance 10 s. After that, the generator torque setpoint SP_T or the maximum allowable generator torque SP_Tmax is determined according to the solid line.

Coming back to Figure 3, the fifth information I5 is also determined depending on the first I1 and the second I2 information and is representative of a pitch angle change rate d(β_i)/dt. The pitch angle change rate d(β_i)/dt thereby depends on the actual rotational speed n_a of the rotor 10. The pitch angle change rate d(β_i)/dt may either define the maximum speed with which the pitch angle of at least one rotor blade 1, 2, 3 is adjusted or defines the speed with which the pitch angle setpoint SP_β_i is changed.

Figure 7 shows an example of how the pitch angle change rate d(β_i)/dt may depend on the actual rotational speed n_a. It is a function with a higher pitch angle change rate d(β_i)/dt at lower rotational speeds n_a and a lower pitch angle change rate d(β_i)/dt at higher actual rotational speeds n_a.

The combination of adjusting the pitch angles β_i depending on the actual rotational speed n_a of the rotor and, at the same time, adjusting the generator torque T_G depending on the actual rotational speed n_a leads to a particularly safe and efficient reduction of the rotor rotation. The efficiency can be further increased by also changing the pitch angle change rate depending on the actual rotational speed n_a.

Figure 4 shows an exemplary embodiment of a system for a wind turbine. This system may be used in the wind turbine 100 of Figure 1. The system comprises the control device 30, the generator 40, a drive train 41 coupled to the generator 40, a generator torque adjustment system 400 and the pitch adjustment system 500.

The generator torque adjustment system 400 comprises a generator torque controller 42 and a generator side converter 43 coupled to the generator 40. The generator torque controller 42 is (part of) a generator side converter controller and is configured to adjust the generator torque of the generator 40. The generator controller 42 receives the fourth information 14 being representative of the generator torque setpoint from the control device 30. A sensor, e.g. an incremental encoder, is coupled to the drive train 41 and provides measurements M(n_a) to the control device 30. The measurements M(n_a) are representative of the actual rotational speed n_a of the rotor.

The pitch adjustment system 500 comprises a pitch drive 50 for each rotor blade (only one of the drives 50 is shown in Figure 4). The pitch drive 50 is coupled to a motor side converter 51. The motor side converter 51 is coupled to a grid side converter 53 via a DC link intermediate circuit 52. Power from an electric grid is transmitted to the pitch drive 50 via the grid side converter 53, the DC link intermediate circuit 52 and the motor side converter 51. The pitch adjustment system 500 further comprises a pitch controller 54 which receives the third I3 and fifth 15 information from the control device 30 and controls the pitch drives 50 according to the corresponding pitch angle setpoint and pitch angle change rate. A sensor, e.g. an incremental encoder, is assigned to each of the pitch drives 50. The measurements of the sensor can be used to determine the actual pitch angles β_i of the rotor blades. The measurements M(β_i) are sent to the control device 30. The control device 30 may determine the first information I1 depending on the measurements M(β_1).

The invention described herein is not limited by the description in conjunction with the exemplary embodiments. Rather, the invention comprises any new feature as well as any combination of features, particularly including any combination of features in the patent claims, even if said feature or said combination per se is not explicitly stated in the patent claims or exemplary embodiments.

### Reference sign list:

- 1, 2, 3: rotor blades
- 4: nacelle
- 10: rotor
- 20: tower
- 30: control device
- 40: generator
- 41: drive train
- 42: generator torque controller
- 43: generator side converter
- 50: pitch drive
- 51: motor side converter
- 52: DC link intermediate circuit
- 53: grid side converter
- 54: pitch controller
- 100: wind turbine
- 104: foundation
- 112: rotor hub
- 400: generator torque adjustment system
- 500: pitch adjustment system
- 11: first information
- I2: second information
- 13: third information
- 14: fourth information
- 15: fifth information
- β_i: pitch angle
- n_a: actual rotational speed of the rotor
- SP_β_i: pitch angle setpoint
- Δβ: difference
- Δβ_max: maximum allowable pitch angle difference
- T_G: generator torque
- SP_T: generator torque setpoint
- SP_T_max: maximum allowable generator torque
- d(β_i)/dt: pitch angle change rate
- M(n_a): measurements
- M(β_i): measurements

## Claims

1. Method for operating a wind turbine (100) having a rotor (10) with at least two rotor blades (1, 2, 3) and a pitch adjustment system (500) for adjusting the pitch angles (β_i) of the at least two rotor blades (1, 2, 3), wherein the method comprises the steps of
- determining first information (11) which is representative of the appearance of a failure in the pitch adjustment system (500) while the rotor (10) is rotating;
- providing second information (12) which is representative of the actual rotational speed (n_a) of the rotor (10);
- determining third information (13) depending on the first information (11) and the second information (12), wherein the third information (13) is representative of a pitch angle setpoint (SP_β_i) for at least one rotor blade (1, 2, 3), wherein the pitch angle setpoint (SP_β_i)
- depends on the actual rotational speed (n_a) and
- is chosen to reduce the rotational speed of the rotor (10),
- so that, when the wind turbine (100) is operated according to the third information (13), a pitch angle (β_i) of at least one rotor blade (1, 2, 3) is adjusted to the pitch angle setpoint (SP_β_i).

2. Method according to claim 1, wherein
- the failure in the pitch adjustment system (20) is a fault event in which at least one of the rotor blades (1) is impaired in its mobility and at least one other rotor blade (2, 3) is still movable as intended,
- the pitch angle setpoint (SP_β_2, SP_β_3) is for the at least one movable-as-intended rotor blade (2, 3) and is chosen such that the difference (Δβ) between the pitch angle setpoint (SP_β_2, SP_β_3) and the pitch angle (β_1) of the at least one impaired rotor blade (1) is lower or equal to a maximum allowable pitch angle difference (Δβ_max), wherein the maximum allowable pitch angle difference (Δβ_max) depends on the actual rotational speed (n_a).

3. Method according to claim 1 or 2, wherein
- the wind turbine (100) comprises a generator (40) coupled to the rotor (10) in order to convert mechanical power into electrical power, the method further comprising
- determining fourth information (14) depending on the first (11) and the second information (12), wherein the fourth information (14) is representative of a generator torque setpoint (SP_T), wherein
- the generator torque setpoint (SP_T) depends on the actual rotational speed (n_a) of the rotor (10) and is chosen to reduce the rotational speed of the rotor (10), or
- the generator torque setpoint (SP_T) is chosen to reduce the rotational speed of the rotor (10) while ensuring that a maximum allowable generator torque (SP_T_max) is not exceeded, wherein the maximum allowable generator torque (SP_T_max) depends on the actual rotational speed (n_a), wherein
- the fourth information (14) is determined such that, when the wind turbine (100) is operated according to the fourth information (14), a generator torque of the generator (40) is adjusted to the generator torque setpoint (SP_T).

4. Method according to claim 3, wherein
- the third information (13) and fourth information (14) are determined such that, when the wind turbine (100) is operated according to the third information (13) and fourth information (14), the adjustment of the pitch angle (β_i) of the at least one rotor blade (1, 2, 3) to the pitch angle setpoint (SP_β_i) and the adjustment of the generator torque to the generator torque setpoint (SP_T) are done simultaneously.

5. Method according to any one of the preceding claims, further comprising
- determining fifth information (15) depending on the first information (11) and the second information (12) which is representative of a pitch angle change rate (d(β_i)/dt), wherein
- the pitch angle change rate (d(β_i)/dt) depends on the actual rotational speed (n_a),
- the pitch angle change rate (d(β_i)/dt) defines the maximum speed with which the pitch angle (β_i) of at least one rotor blade (1, 2, 3) is adjusted to the pitch angle setpoint (SP_β_i) or it defines the speed with which the pitch angle setpoint (SP_β_i) is changed.

6. Method according to claim 2 or any one of claims 3 to 5 in its dependency of claim 2, wherein
- the rotor (10) comprises at least three rotor blades (1, 2, 3),
- the third information (13) is determined such that, when the wind turbine is operated according to the third information (13), the pitch angles (β_1, β_2) of at least two movable-as-intended rotor blades (2, 3) are synchronized.

7. Method according to any one of the preceding claims, wherein
- the wind turbine (100) is operable in a first and a second operating mode,
- the first operating mode is a mode in which the pitch angles (β_i) of the rotor blades (1, 2, 3) are controlled individually,
- the second operating mode is a mode in which the pitch angles (β_i) of the rotor blades (1, 2, 3) are controlled collectively, and
if the wind turbine (100) is operated in the first operating mode when the first information (11) is determined to be representative of a failure in the pitch adjustment system (500), the method further comprises the step of
- generating a switch command which is configured to cause a transition from the first operating mode into the second operating mode.

8. Method according to any one of the preceding claims, wherein
- determining the first information (11) comprises determining whether the pitch angle (β_1) of one rotor blade (1) differs from the pitch angle (β_2, β_3) of the at least one other rotor blade (2, 3) by more than a defined threshold.

9. Method according to claim 3 or any one of claims 4 to 8 in its dependency of claim 3, wherein
- the generator torque setpoint (SP_T) or the maximum allowable generator torque (SP_T_max) increases with increasing actual rotational speed (n_a).

10. Method according to claim 2 or any one of claims 6 to 9 in its dependency of claim 2, wherein
- the maximum allowable pitch angle difference (Δβ_max) decreases with increasing actual rotational speed (n_a).

11. Method according to any one of the preceding claims, wherein
- the pitch angle setpoint (SP_β_i) is chosen to reduce the rotational speed of the rotor (10) up to a stop of the rotation of the rotor (10).

12. Computer program comprising instructions which, when the program is executed by a control system, cause the control system to carry out the method of any one of claims 1 to 11.

13. Computer-readable data carrier having the computer program of claim 12 stored thereon.

14. Control device (30) which is configured to execute the method according to any one of claims 1 to 11.

15. Wind turbine (100) comprising
- a rotor (10) with at least two rotor blades (1, 2, 3),
- a generator (40) coupled to the rotor (10) in order to convert a mechanical power of the rotor (10) into electrical power,
- the control device (30) according to claim 14,
- a generator torque adjustment system (400) for adjusting a generator torque of the generator (40),
- a pitch adjustment system (500) for adjusting pitch angles (β_i) of the rotor blades (1, 2, 3),
wherein
- the control device (30) is signally connected or connectable to both the generator torque adjustment system (400) and the pitch adjustment system (500),
- the wind turbine (100) is configured such that,
- upon provision of the third information (13), the pitch adjustment system (500) adjusts the pitch angle (β_i) of at least one rotor blade (1, 2, 3) to the pitch angle setpoint (SP_β_i), and
- upon provision of the fourth information (14), the generator torque adjustment system (400) adjusts the generator torque to the generator torque setpoint (SP_T) .
